# EUROPÄISCHE PATENTSCHRIFT

(11) **EP 1 435 458 B1**
(45) Veröffentlichungstag und Bekanntmachung des Hinweises auf die Patenterteilung: **15.10.2008**
(21) Anmeldenummer: 02028889.0
(22) Anmeldetag: 23.12.2002
(51) Int. Cl.: F04B 13/00, F04B 23/02, F01N 3/20, B01D 53/94

(54) **Dosierpumpenaggregat**
Dosing pump unit
Unité de pompe de dosage

(43) Veröffentlichungstag der Anmeldung: 07.07.2004
(73) Patentinhaber: Grundfos NoNox a/s, 8850 Bjerringbro (DK)
(72) Erfinder: Plougmann, Jan, 8000 Aarhus C (DK)
(74) Vertreter: Vollmann, Heiko

(56) Entgegenhaltungen:
- EP-A- 1 149 991
- WO-A-02/25074
- DE-A- 10 127 834
- US-A- 6 041 594
- US-B1- 6 354 079

## Beschreibung

Die Erfindung betrifft ein Dosierpumpenaggregat zum Zumischen eines flüssigen Reduktionsmittels in einen Abgasstrom.

Bei selbstzündenden Brennkraftmaschinen entstehen beim Betrieb mit Sauerstoffüberschuss, was in der Vielzahl der Betriebszusfönde der Fall ist, Stickoxide, und zwar insbesondere bei Direkteinrspritzung in den Hauptbrennraum, wie dies typischerweise bei Dieselmotoren der ist. Um diese Umwelt schädigenden NOₓ-Emissionen zu verringern, ist es bekannt, den Abgasstrom einem Reduktionskatalysator zuzuführen. Als Reduktionsmittel wird eine wässrige Harnstofflösung dem Abgas vor Eintritt in den Katalysator fein verteilt zugeführt. Dabei ist die zugeführte Harnstoffmenge möglichst exakt auf den Verbrennungsprozess abzustimmen, um eine möglichst vollständige Reduktion innerhalb des Katalysators zu gewährleisten und andererseits einen Harnstoffüberschuss zu vermeiden. Hierzu ist eine gesonderte Steuer- und Regelelektronik erforderlich, welche in Abhängigkeit der für den Verbrennungs- und Reduktionsprozess charakteristischen Größen (Temperatur vor und hinter dem Katalysator, dem Verbrennungsprozess zugeführtes Luftvolumen, NOₓ- und O₂- Gehalt des Abgases) die Harnstoffzufuhr steuert.

Um die wässrige Harnstofflösung in der jeweils gerade benötigten Menge zuzuführen, ist es bekannt, ein Dosierventil einzusetzen (DE 44 36 397 A1). Die Förderung der Harnstofflösung erfolgt dabei durch Druckbeaufschlagung eines Vorrotstanks mit Pressluft, die wiederum auch zum Einbringen der Harnstofflösung in den Abgasstrom dient.

Das Unterdrucksetzen des Harnstoffvorratsbehälters in Verbindung mit einem Dosierventil unmittelbar vor der Einspritzstelle hat systembedingte Nachteile. Insofern günstiger ist die Verwendung einer Dosierpumpe, welche die wässrige Harnstofflösung aus einem im Wesentlichen druckfreien Vorratsbehälter ansaugt und gezielt einem Druckgas, insbesondere Druckluftstrom zuführt, der dann über eine Düse unmittelbar vor dem Katalysator dem Abgasstrom fein verteilt zugeführt. Eine-solche Anordnung ist insbesondere für den mobilen Einsatz in Kraftfahrzeugen zu bevorzugen, und beispielsweise aus US 5 842 341 bekannt.

Dosierpumpen werden in vielen technischenBereichen eingesetzt jedoch üblicherweise stationär. Eine solche von der Firma Grundfos, Dänemark hergestellte und vertriebene Dosierpumpe ist unter der Typenbezeichnung DME bzw. DMS bekannt. Diese Pumpen sind für den stationären Einsatz konzipiert und ausgelegt und daher für den hier in Rede stehenden Einsatzzweck nur sehr bedingt geeignet.

Aus WO 96/08639 zählt es zum Stand der Technik, als Dosierpumpe eine Membranpumpe einzusetzen. Wie auch aus EP 0 586 913 A2 bekannt, spritzt jedoch die Pumpe das flüssige Reduktionsmittel nicht unmittelbar in den Abgasstrom, sondern es ist eine Vormischeinrichtung vorgesehen, in der das flüssige Reduktionsmittel einem Druckgasstrom beaufschlagt wird, wonach dann erst die Beaufschlagung des Abgasstroms erfolgt. Um zu verhindern, dass bei Nichtbenutzung der Einrichtung das Reduktionsmittel, das in Kontakt mit der Umgebungsluft oder Druckluft gelangt, austrocknet, also auskristallisiert und den Strömungsquerschnitt verengt oder das Reduktionsmittel einfriert, ist dort vorgesehen, sämtliche Reduktionsmittel führenden Leitungen bei Nichtgebrauch mit Druckluft auszublasen. Darüber hinaus bestehen, die Abgasreinigungsvorrichtungen, wie sie in WO 96/08639 oder EP 0 586 913 A2 beschrieben sind, aus einer Vielzahl von Komponenten, die innerhalb des Fahrzeugs montiert und miteinander elektrisch, mechanisch oder hydraulisch verbunden werden müssen.

Vor diesem Stand der Technik liegt der vorliegenden Erfindung die Aufgabe zugrunde, ein dem gegenüber verbessertes Dosierpumpenaggregat zu schaffen.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgendere Beschreibung und der Zeichnung angebeben.

Grundgedanke der vorliegenden Erfindung ist es, das Dosierpumpenaggregat mit weiteren, zweckmäßigerweise im Aggregatgehäuse anzuordnenden Bauteilen für diesen speziellen Einsatzzweck zu versehen. Dabei ist die Vormischeinrichtung vollständig im Aggregatgehäuse angeordnet ggf., einschließlich der hierfür erforderlichen Nebenaggregate. Dies ist insbesondere für den Einsatz in Fahrzeugen von Vorteil, wo die Montage von Einzelbauteilen nach Möglichkeit, zu vermeiden ist, da diese einerseits gegen die rauen Umgebungseinflüsse zu kapseln sind, andererseits schwingungsarm zu lagern sind und schließlich den Einbauraum für andere Aggregate verengen oder wegnehmen,

Die Vormischeinrichtung, die gemäß der Erfindung innerhalb des Aggregatgehäuses angeordnet ist, dient dazu, zunächst einmal das flüssige Reduktionsmittel, also in der Regel eine wässrige Harnstofflösung (beispielsweise 30%ige Harnstofflösung) mit einem Druckluftstrom zu beaufschlagen um dann diesen vorgemischten Massenstrom mittels einer unmittelbar vor dem Katalysator im Abgasstrom angeordneten Düse dem Abgasstrom möglichst fein verteilt zuzuführen. Dabei sorgt die Dosierpumpe dafür, dass nur die gerade zur Reduktion der Stickoxide benötigte Menge von Harnstofflösung zugeführt wird.

Da Harnstoff der in wässriger Lösung gehalten ist, bei Kontakt mit Luft, also insbesondere auch Druckluft zumindest teilweise auskristallisieren kann, was zu Verklebungen, Verengungen oderVerstopfungen im Leitungssystem führen kann, sind gemäß der Erfindung Mittel zum Ausblasen der Leitungsteile vorgesehen, welche sowohl mit dem flüssigen Reduktionsmittel als auch mit dem Druckgasstrom in Kontakt treten also zumindest für die Leitungsteile, die hinter der Stelle liegen, an der die beiden Ströme aufeinander treffen.

Gemäß der ErFndung ist das Aggregatgehäuse aus mehreren funktionell voneinander getrennten Teilen ausgebaut und zwar derart, dass ein Gehäuseteil für die Elektronik, ein anderes Gehaüseteil für den Antriebsmotor und die Antriebsmechanik und ein weiteres Gehäuseteil für die Fluid führenden Bauteile wie Leitungen, Leitungsanschlüsse. Ventile und Membranpumpe vorgesehen sind.

Um ein Ausblasen zu ermöglichen ist gemäß der Erfindung ein erstes Ventil innerhalb des Aggregatgehäuses vorgesehen, das in einer ersten Schaltstellung eine den Druckluftstrom führende Leitung mit einer zum Abgasstrom führenden Leitung zum Zwecke des Ausblasens dieser Leitung verbindet und in einer zweiten Schaltstellung die Ausgangsleitung der Pumpe mit der zum Abgasstrom führenden Leitung verbindet, also die normale Betriebsstellung bildet. Es kann also ohne reifere technische Hilfsmittel unter Verwendung der ohnehin zur Verfügung stehenden Druckluft ein Ausblasen der entsprechenden Leitungsteile durch entsprechende Ansteuerung dieses ersten Ventils erzielt werden, um diese Leitungsteile vor Harnstoffablagerungen weitgehend zu schützen.

Andererseits ist vor Inbetriebnahme der Vormischeinrichtung sicherzustellen, dass das Leitungssystem, insbesondere vom Ausgang der Pumpe bis zum Mischstelle vollständig mit flüssigen Reduktionsmittel gefüllt ist, denn nur dann entspricht die zugemischte Menge an Reduktionsmittel der von der Dosierpumpe geförderten Menge. Hierzu, sind gemäß der Erfindung Mittel zum Spülen und/oder Entlüften der Reduktionsmittel führenden Leitungen vorgesehen, und zwar innerhalb des Aggregat gehäuses. Vorzugsweise ist hierzu innerhalb des Aggregatgehäuses ein zweites Ventil - nachfolgend Vorspülventil genannt- angeordnet über das die Ausgangsleitung der Pumpe wahlweise mit einer Leitung verbindbar ist, die zu dem Tank für das Reduktionsmittel führt oder mit einer zum ersten Ventil bzw. einer zum Abgasstrom führenden Leitung. Letztere Stellung ist die Betriebsstellung. Zur Inbetriebnahme der Vormischeinrichtung wird das Vorspülventil in die erstgenannte Schaltstellung gesteuert und die Dosierpumpe auf Dauerbetrieb geschaltet, so dass die Leitung kontinuierlich mit flüssigen Reduktionsmittel gespült wird das dann in den Vorratsbehälter zurückfließt. Hierdurch kann zuverlässig sichergestellt werden, dass die Reduktionsmittel führenden Leitungen vollständig mit diesem gefüllt sind.

Dabei wird vorzugsweise die Antriebsmechanik im mittleren Gehäuseteil angeordnet sein und die Elektronik zu einer Seite und die fluidführenden Bauteile zur anderen Seite dieses mittleren Gehäuseteils. Ein solche Anordnung fördert nicht nur die Betriebssicherheit des Aggregats sondern ist auch vorteilhaft im Folie von Reparaturen, da beispielsweise austretendes Reduktionsmittel nicht mit mechanischen oder elektronischen Bauteilen in Kontakt kommen kann.

Es versteht sich, dass die Ventile im fluidführenden Teil des Pumpengehäuses angeordnet sind, ebenso wie die Leitungsanchlüsse, also vorzugsweise auch der Anschluss für eine Druckluftzufuhrleitung zur Versorgung des Aggregats mit Druckluft.

Da die Druckluftleitung üblicherweise insbesondere bei Fahrzeugen ständig unter Betriebsdruck steht, ist aggregatseitig vorteilhaft ein Absperrventil für die druckluftführende Leitung vorgesehen, um die Druckluftzufuhr bei Bedarf abschalten zu können.

Um zu verhindern, dass beispielsweise bei Druckabfall flüssiges Reduktionsmittel in die Druckluftleitung eindringt und diese möglicherweise durch Auskristallisation des Harnstoffes verengt ist zweckmäßigerweise ein Rückschlagventil in der druckluftführenden Leitung vorgesehen, und zwar in Durchströmungsrichtung vorteilhaft hinter dem Absperrventil. Dieses Rückschlagventil liegt zweckmäßigerweise ebenfalls innerhalb des Aggregatgehäuses, und zwar in dem Gehäuseteil für die fluidführenden Teile.

Um das gesamte Aggregat schnell und einfach beispielsweise zur Reparatur- oder Wartungszwecken austauschen zu können, ist es zweckmäBig, für alle fluidführenden Leitungen jeweils einenLeitungsanschluss am Aggregatgehäuse vorzusehen, der zur lösbaren Verbindung mit einer entsprechenden Anschlussleitung vorgesehen ist. Dies, kann in einfacher Form durch Anschlussstutzen, auf die ein Schlauch aufschiebbar ist gebildet sein oder aber auch durch Schlauchkupplungssysteme. Da innerhalb des Aggregatgehäuses des Dosierpumpenaggregats ohnehin eine vorzugsweise digitale Steuer- und Regelelektronik vorgesehen ist, ist es zweckmäßig, auch die Steuer- und/oder Regelelektronik innerhalb des Aggregatgehäuses anzuordnen, welche für den Reduktionsprozess und die Ventilsteuerung erforderlich ist.

Gemäß der Erfindung weist das Aggregatgehäuse die vollständige Vormischeinrichtung auf, dies ist nicht nur konstruktiv günstig sondern auch hinsichtlich extremer Betriebszustände, beispielsweise bei tiefen Temperaturen, wie sie im Kraftfahrzeugbetrieb regelmäßig auftreten. Dann kann durch aggregatgehäuseseitige Vorkehrungen, wie beispielsweise einer Heizung oder dergleichen die Betriebssicherheit der gesamten Vormischeinrichtung gewährleistet werden, ohne dass fahrzeugseitig weitere Vorkehrungen zu veranlassen sind.

Um das Dosierpumpenaggregat sowohl in Fahrzeugen einsetzen zu können, welche die Steuer- und/oder Regelelektronik für den Reduktionsprozess und die Ventilsteuerung mittels der digitalen Motorelektronik realisieren als auch in solchen, bei denen eine solche Steuer- und/oder Regelelektronik nicht vorgesehen ist, ist es zweckmäßig, die Regelelektronik oder zumindest Teile der Regelelektronik als vorzugsweise lösbar angebrachtes Gehäusemodul vorzusehen, so dass je nach Einsatzzweck das Dosierpumpenaggregat mit oder ohne ein solches Modul eingesetzt werden kann.

Die Erfindung ist nachfolgend anhand eines in der Zeichnung dargestellten Ausführungsbeispiels näher erläutert. Es zeigen
- Fig. 1: in schematischer Darstellung ein Schaltbild umfassend die Vormischeinrichtung mit ihren Nebenaggregaten, das Abgasleitungssystem und den Reduktionskatalysator,
- Fig. 2: ein Schaltbild der Vormischungseinrichtung des erfindungsgemäßen Dosierpumpenaggregats und
- Fg. 3: in vereinfachter, teilweise geschnittener perspektivischer Ansicht ein Dosierpumpenaggregat gemäß der Erfindung.

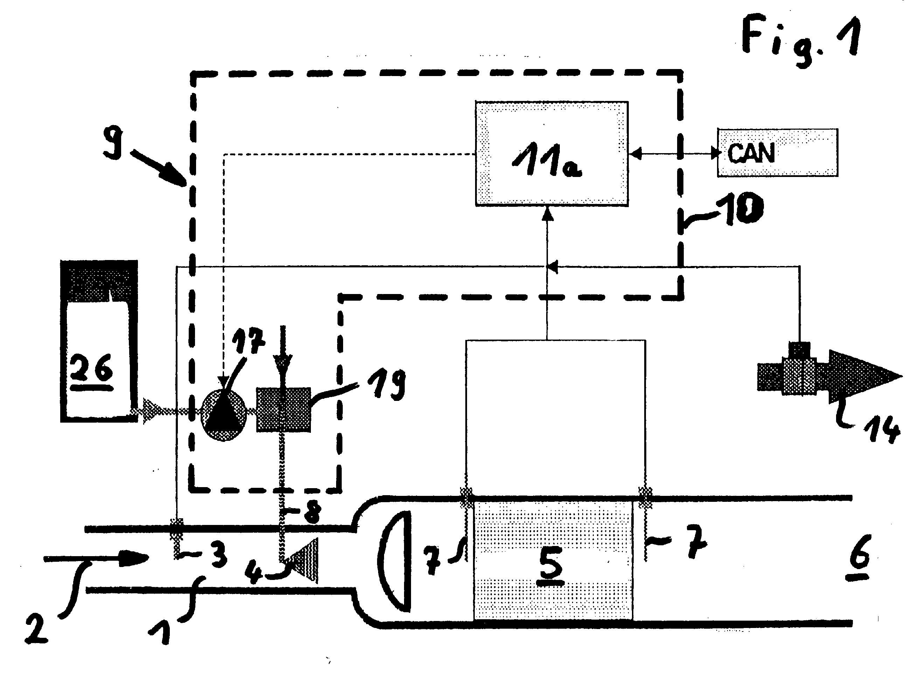

In Fig. 1 ist die Abgasleitung 1 eines Dieselmotors dargestellt, deren Durchströmungsrichtung mit 2 gekennzeichnet ist. Das aus dem Verbrennungsmotor kommende warme Abgas strömt durch die Leitung 1 zunächst an einen Sensor 3 vorbei der den Stickoxid- und Sauerstoffgehalt erfasst. In Durchströmungsrichtung dahinter liegt ein Düsenkopf 4, über den dem Abgasstrom 2 fein verteilt ein Strom bestehend aus Druckluft und flüssigem Reduktionsmittel in Form von wässriger Harnstofflösung zugeführt wird. Unmittelbar dahinter schließt sich dann ein Reduktionskatalysator 5 an, nach dessen Ausgang das Abgas durch das freie Ende 6 der Leitung das System verlässt. In Durchströmungsrichtung sind jeweils vor und hinter dem Katalysator 5 Temperatursensoren 7 vorgesehen.

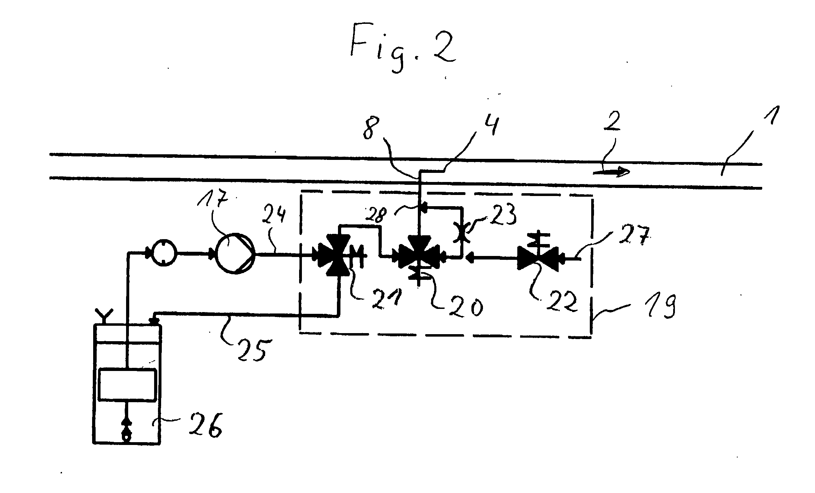

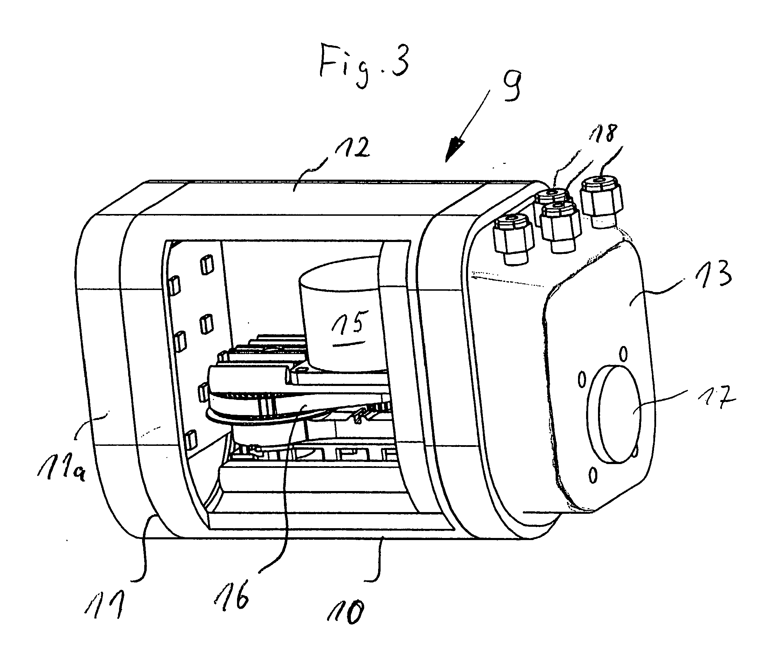

Der Düsenkopf 4 wird von einer Leitung 8 versorgt, die aus einem Dosierpumpenaggregat 9 kommt, wie es anhand der Fig. 2 und 3 dargestellt ist. Das Dosierpumpenaggregat 9 besteht aus einem Aggregatgehäuse 10, das im Wesentlichen in drei Bereiche 11, 12 und 13 aufgeteilt ist. Der zu einer Stirnseite des Gehäuses 10 anschließendeGehäuseteil 11 umfasst einerseits die Steuer- und Regelelektronik für die Dosierpumpe sowie darüber hinaus die Steuer- und Regelelektronik für den Reduktionsprozess. Diese Steuer- und Regelelektronik kann über einen CAN-Bus mit der Motorelektronik verbunden werden und erfasst darüber hinaus die Signale der Temperatursensoren 7, des Sensors 3 und den dem Verbrennungsprozess zugeführten Luftmassenstrom, der in Fig. 1 durch den Pfeil 14 symbolisiert ist.

An den Gehäuseteil 11 für die Elektronik schließt sich ein Gehäuseteil 12 an, welche den Antriebsmotor in Form eines Schrittmotors 15 sowie ein Exzentergetriebe 16 umfasst, welches die Drehbewegung des Motors 15 untersetzt und in einer translatorische Bewegung umsetzt, welche die eigentliche Membranpumpe 17 antreibt, die in einem an den Gehäuseteil 12 anschließenden Gehäuseteil 13 sitzt, welcher sämtliche fluidführenden Teile des Aggregats umfasst. Der Gehäuseteil 13 ist durch eine (nicht dargestellte) Zwischenwand vom Gehäuseteil 12 abgetrennt, so dass im Falle eines unbeabsichtigten Fluidaustritts, sei es bei der Reparatur oder bei einer Undichtigkeit, sichergestellt ist, dass das Fluid nicht in die Gehäuseteile 11 und 12 eindringen kann.

Der Gehäuseteil 11 ist geteilt ausgebildet und weist einen integral mit dem übrigen Gehäuse 10 ausgebildeten Teil auf, welcher die Steuer- und Regelelektronik für den Motor 5 umfasst sowie einen daran stirnseitig anschließenden abnehmbaren Gehäuseteil 11a, welcher die zur Steuerung und Regelung des Reduktionsprozesses erforderliche Elektronik umfasst. Auf diese Weise kann das Aggregat wahlweise mit oder auch ohne diese Steuer- und Regelektronik für den Reduktionsprozess eingesetzt werden. Der Gehäuseteil 11 a ist modulartig ausgebildet und durch Steckverbindungen elektrisch mit der übrigen Elektronik sowie darüber hinaus mechanisch mit dem Gehäuseteil 11 lösbar verbunden.

Innerhalb des Gehäuseteils 13 befindet sich die eigentliche Membranpumpe 17 mit den zugehörigen Rückschlagventilen. Darüber hinaus sind am Gehäuseteil 13 vier Anschlüsse 18 vorgesehen an denen lösbar Leitungen anschließbar sind und die in Fig. 2 im einzelnen dargestellt sind.

Im Gehäuseteil 13 sind die Membranpumpe 17 sowie eine Vormischeinrichtung 19 angeordnet. Die Vormischeinrichtung 19 umfasst ein erstes 3/2 Wegeventil 20, ein zweites 3/2 Wegeventil 21 als Vorspülventil und ein Absperrventil 22 sowie darüber hinaus eine Dosselstelle 23.

Die Funktionen und Leitungsverbindungen und Ventile ergeben sich wie folgt:

Vor Beginn des Betriebs des Pumpenaggregats mit Vormischeinrichtung 19 muss sichergestellt sein, dass die pumpenausgangsseitige Leitung 24 mit flüssigem Reduktionsmittel gefüllt ist. Hierzu wird das Vorspülventil 21 so angesteuert, dass die pumpenausgangsseitige Leitung 24 mit einer Rücklaufleitung 25 verbunden wird, welche das flüssige Reduktionsmittel in einen Vorratsbehälter 26 rückfördert. Aus dem Vorratsbehälter 26 wird das Reduktionsmittel zur Pumpe 17 hin angesaugt und gefördert.

Nach dem die Vorspülung erfolgt ist und somit sichergestellt ist, dass die Leitung 24 vollständig flüssigkeitsführend ist, wird das Vorspülventil 21 umgesteuert, wodurch die pumpenausgangsseitige Leitung 24 mit einem Eingang des Ventils 20 verbunden wird, das in Betriebsstellung so geschaltet ist, dass eine Leitungsverbindung zur Leitung 8 besteht, welche den Düsenkopf 4 beaufschlagt. Über diese Leitungsführung gelangt Reduktionsmittel in die Leitung 8. Druckluft, welche über einen Anschluss 18 zugeführt wird, gelangt über eine Leitung 27 durch das geöffnete Absperrventil 22 zur Drosselstelle 23 und von dort über die Mischstelle 28 in die Leitung 8, so dass bei entsprechender Förderung der Pumpe 17 und Beaufschlagung der Leitung 27 mit Druckluft die gewünschte Vormischung erfolgt und über die Leitung 8 (ebenfalls über einen Anschluss 18) aus dem Aggregatgehäuse hinausgeführt wird.

Die Dosierung des Reduktionsmittels erfolgt in an sich bekannter Weise mit Hilfe der Steuer- und Regelelektronik betriebsabhänig. Bei Beendigung des Betriebs, wenn also beispielsweise die Brennkraftmaschine abgeschaltet wird, wird das Ventil 20 umgesteuert, derart das die druckluftführende Leitung 27 unter Umgehung der Drosselstelle 23 unmittelbar mit der Leitung 8 verbunden wird. Auf diese Weise wird der jenseits des Ventils 20 liegende Teil der Reduktionsmittel führenden Leitungen, also auch der Teil, der jenseits der Mischstelle 28 liegt, mit Druckluft versorgt, wodurch Reste des in der Leitung verbliebenen Reduktionsmittels über die Düse 4 ausgeblasen werden und somit das Leitungssystem selbst durch auskristallisierenden Harnstoff nicht verunreinigen können.

Die vier Anschlüsse 18 des Gehäuseteils 13 sind somit Anschlüsse für die Saugleitung 29 der Pumpe 17, für die Rücklaufleitung 25 zum Vorratsbehälter 26, für die Druckluftzufuhr zur Leitung 27 sowie für die Leitung 8.

Die Elektrischen- und Sensoranschlüsse sind am Gehäuseteil 11 vorgesehen. Das Aggregatgehäuse ist kompakt und hermetisch abgeschlossen ausgebildet, so dass es an beliebiger Stelle im Motorraum eingebaut werden kann. Elektrisch ausgelegt ist das Aggregat zur Versorgung vom bordeigenen Netz, beispielsweise mit 12 oder 42 Volt. Der Vorratsbehälter 26 für das Reduktionsmittel ist drucklos und kann daher an nahezu beliebiger Stelle im Fahrzeug angeordnet werden, es sind keine besonderen Vorkehrungen erforderlich, wie dies bei Druckbehältern der Fall ist. Die zum Betrieb der Vormischeinrichtung 19 erforderliche Druckluft kann der bordeigenen Druckluftversorgung entnommen werden oder durch einen gesonderten Kompressor zur Verfügung gestellt werden.

### Bezugszeichenliste

- 1 -: Abgasleitung
- 2 -: Abgasstrom
- 3 -: Sensor
- 4 -: Düsenkopf
- 5 -: Reduktionskatalysator
- 6 -: freies Ende der Abgasleitung
- 7 -: Temperatursensoren
- 8 -: Leitung
- 9 -: Dosierpumpenaggregat
- 10 -: Gehäuse
- 11 -: Gehäuseteil für Elektronik
- 11a -: abnehmbares Gehäuseteil
- 12 -: Gehäuseteil für Mechanik
- 13 -: Gehäuseteil für fluidführende Bauteile
- 14 -: Luftzufuhr Motor
- 15 -: Motor
- 16 -: Exzentergetriebe
- 17 -: Membranpumpe
- 18 -: Anschlüsse
- 19 -: Vormischeinrichtung
- 20 -: 3/2-Wegeventil (erstes Ventil)
- 21 -: 3/2-Wegeventil (Vorspülventil)
- 22 -: Absperrventil
- 23 -: Drosselstelle
- 24 -: Leitung
- 25 -: Rücklaufleitung
- 26 -: Vorratsbehälter
- 27 -: Druckluftleitung
- 28 -: Mischstelle
- 29 -: Saugleitung

## Patentansprüche

1. Dosierpumpenaggregat zum Zumischen eines flüssigen Reduktionsmittels in einen Abgasstrom (2), mit einem Aggregatgehäuse (10), das einen elektrischen Antrieb (15), eine Pumpe (17) und eine Steuer- und/oder Regelelektronik aufnimmt und das eine Vormischeinrichtung (19) umfasst, in der das flüssige Reduktionsmittel einem Druckgasstrom beaufschlagt wird, wobei die Pumpe (17) eine Membranpumpe ist, innerhalb des Aggregatgehäuses (10) Übersetzungsmittel (16) zwischen Antrieb (15) und Pumpe (17) angeordnet und Mittel (20) zum Ausblasen der Leitungsteile (8) vorgesehen sind, welche das flüssige Reduktionsmittel und den Druckgasstrom führen, und das Aggregatgehäuse (10) aus mehreren funktionell voneinander getrennten Teilen (11, 12, 13) aufgebaut ist, von denen eines die Elektronik, ein anderes den Antriebmotor (15) und die Antriebsmechanik (16) und ein weiteres die Fluid führenden Bauteile (17, 18, 20, 21, 22) umfasst.

2. Dosierpumpenaggregat nach Anspruch 1, **dadurch gekennzeichnet, dass** innerhalb des Aggregatgehäuses ein erstes Ventil angeordnet ist, welches in einer ersten Schaltstellung eine den Druckgasstrom, insbesondere den Druckluftstrom, führende Leitung (27) mit einer zum Abgasstrom führenden Leitung und in einer zweiten Schaltstellung die Ausgangsleitung (24) der Pumpe (17) mit der zum Abgasstrom (2) führenden Leitung (8) verbindet.

3. Dosierpumpenaggregat nach Anspruch 1 oder 2, **dadurch gekennzeichnet, dass** Mittel (21, 25) zum Spülen und/oder Entlüften der Reduktionsmittel führenden Leitungen (24) vorgesehen sind.

4. Dosierpumpenaggregat nach einem der vorhergehenden Ansprüche, **dadurch gekennzeichnet, dass** innerhalb des Aggregatgehäuses (10) ein zweites Ventil (21) (Vorspülventil) angeordnet ist, über das die Ausgangsleitung (24) der Pumpe (17) wahlweise mit einer Leitung (25), welche zu einem Tank (26) für das Reduktionsmittel führt, oder mit einer zum ersten Ventil (20) bzw. einer zum Abgasstrom (2) führenden Leitung (8) verbindet.

5. Dosierpumpenaggregat nach einem der vorhergehenden Ansprüche, **dadurch gekennzeichnet, dass** die Ventile (20, 21, 22) im fluidführenden Teil (13) des Pumpengehäuses (10) angeordnet sind.

6. Dosierpumpenaggregat nach einem der vorhergehenden Ansprüche, **dadurch gekennzeichnet, dass** das Aggregatgehäuse (10) einen Anschluss (18) für eine Druckluftzufuhrleitung (27) aufweist.

7. Dosierpumpenaggregat nach einem der vorhergehenden Ansprüche, **dadurch gekennzeichnet, dass** das Aggregatgehäuse (10) ein Absperrventil (22) aufnimmt, das in der Druckluft führenden Leitung (27) liegt.

8. Dosierpumpenaggregat nach einem der vorhergehenden Ansprüche, **dadurch gekennzeichnet, dass** das Aggregatgehäuse (10) ein Rückschlagventil aufnimmt, das in der Druckluft führenden Leitung (27) liegt.

9. Dosierpumpenaggregat nach einem der vorhergehenden Ansprüche, **dadurch gekennzeichnet, dass** das Aggregatgehäuse (10) eine Drosselstelle (23) aufnimmt, die in der Druckluft führenden Leitung (27) liegt, und zwar in Durchströmungsrichtung vor der Stelle (28), an der das Reduktionsmittel mit Druckluft beaufschlagt wird.

10. Dosierpumpenaggregat nach einem der vorhergehenden Ansprüche, **dadurch gekennzeichnet, dass** das Aggregatgehäuse (10) für jede in oder aus dem Gehäuse (10) führende fluidführende Leitung einen Leitungsanschluss (18) zur lösbaren Verbindung mit einer entsprechenden Anschlussleitung aufweist.

11. Dosierpumpenaggregat nach einem der vorhergehenden Ansprüche, **dadurch gekennzeichnet, dass** innerhalb des Aggregatgehäuses (10) auch die Steuer- und/oder Regelelektronik für den Reduktionsprozess und die Ventilsteuerung angeordnet ist.

12. Dosierpumpenaggregat nach einem der vorhergehenden Ansprüche, **dadurch gekennzeichnet, dass** Teile der Regelelektronik als vorzugsweise lösbar angebrachtes Gehäusemodul (11a) angeordnet sind.

## Claims

1. A metering pump assembly for admixing a fluid reduction agent into an exhaust gas flow (2), with an assembly housing (10) which accommodates an electrical drive (15), a pump (17) and control and regulation electronics and which comprises a premixing means (19) in which the fluid reduction agent is subjected to a pressurised gas flow, wherein the pump (17) is a membrane pump, gearing means (16) are arranged between the drive (15) and the pump (17) within the assembly housing (10) and that means (20) for blowing out the conduit parts (8) are provided, which lead the fluid reduction agent and the pressurised gas flow, and the assembly housing (10) is constructed of several parts (11, 12, 13) which are functionally separated from one another, of which one comprises the electronics, another the drive motor (15) and the drive mechanics (16) and a further one the components (17, 18, 20, 21, 22) leading the fluid

2. A metering pump assembly according to claim 1, **characterised in that** a first valve is arranged within the assembly housing, said first valve in a first switched position connecting a conduit (27) leading the pressurised gas flow, in particular the pressurised air flow, to a conduit leading to the exhaust gas flow, and in a second switched position connecting the exit conduit (24) of the pump (17) to the conduit (8) leading to the exhaust gas flow (2).

3. A metering pump assembly according to claim 1 or 2, **characterised in that** means (21, 25) for flushing and/or bleeding conduits (24) leading the reduction agent are provided.

4. A metering pump assembly according to one of the preceding claims, **characterised in that** a second valve (21) (preflushing valve) is arranged within the assembly housing (10), via which the exit conduit (24) of the pump (17) selectively connects to a conduit (25) which leads to a tank (26) for the reduction agent, or to a conduit (8) leading to the first valve (20) or to the exhaust gas flow (2).

5. A metering pump assembly according to one of the preceding claims, **characterised in that** the valves (20, 21, 22) are arranged in the fluid-leading part (13) of the pump housing (10).

6. A metering pump assembly according to one of the preceding claims, **characterised in that** the assembly housing (10) comprises a connection (18) for a pressurised air supply conduit (27).

7. A metering pump assembly according to one of the preceding claims, **characterised in that** the assembly housing (10) accommodates a shut-off valve (22) which lies in the conduit (27) leading pressurised air.

8. A metering pump assembly according to one of the preceding claims, **characterised in that** the assembly housing (10) accommodates a return valve, which lies in the conduit (27) leading pressurised air.

9. A metering pump assembly according to one of the preceding claims, **characterised in that** the assembly housing (10) accommodates a throttle location (23) which lies in the conduit (27) leading pressurised air, and specifically in the through-flow direction upstream of the location (28) at which the reduction agent is subjected to pressurised air.

10. A metering pump assembly according to one of the preceding claims, **characterised in that** the assembly housing (10) for each fluid-leading conduit leading into or out of the housing (10), comprises a conduit connection (18) for the releasable connection to a corresponding connection conduit.

11. A metering pump assembly according to one of the preceding claims, **characterised in that** the control and/or regulation electronics for the reduction process and the valve control are also arranged within the assembly housing (10).

12. A metering pump assembly according to one of the preceding claims, **characterised in that** parts of the regulation (closed-loop control) electronics are arranged as a preferably releasably attached housing module (11a).

## Revendications

1. Groupe motopompe de dosage pour l'apport et le mélange d'un agent de réduction liquide dans un flux de gaz d'échappement (2), comportant un carter du groupe (10) qui reçoit un entraînement électrique (15), une pompe (17) et une électronique de commande et/ou de régulation et qui contient un dispositif de pré-mélange (19), dans lequel l'agent de réduction liquide est exposé à un flux de gaz comprimé, étant précisé que la pompe (17) est une pompe à membrane, qu'à l'intérieur du carter (10) du groupe, sont disposés, entre l'entraînement (15) et la pompe (17), des moyens de transmission multiplicateurs (16) et sont prévus des moyens (20) pour vider par éjection les parties de conduit (8) qui acheminent l'agent de réduction liquide et le flux de gaz comprimé, et que le carter (10) du groupe est constitué de plusieurs parties (11, 12, 13) fonctionnellement isolées l'une de l'autre, dont une contient l'électronique, une autre le moteur d'entraînement (15) ainsi que le mécanisme d'entraînement (16), et une autre encore les composants (17, 18, 20, 21, 22) conduisant du fluide.

2. Groupe motopompe de dosage selon la revendication 1, **caractérisé en ce qu'**à l'intérieur du carter du groupe est disposée une première vanne qui, dans une première position de commutation, relie un conduit (27) acheminant le flux de gaz comprimé, en particulier le flux d'air comprimé, à un conduit menant au flux de gaz d'échappement et, dans une deuxième position de commutation, relie le conduit de sortie (24) de la pompe (17) au conduit (8) menant au flux de gaz d'échappement (2).

3. Groupe motopompe de dosage selon la revendication 1 ou 2, **caractérisé en ce que** des moyens (21, 25) sont prévus pour laver et/ou purger les conduits (24) acheminant l'agent de réduction.

4. Groupe motopompe de dosage selon l'une des revendications précédentes, **caractérisé en ce qu'**à l'intérieur du carter (10) du groupe est disposée une deuxième vanne (21) (vanne de pré-lavage), par l'intermédiaire de laquelle le conduit de sortie (24) de la pompe (17) peut être relié sélectivement à un conduit (25), qui mène à un réservoir (26) prévu pour l'agent de réduction, ou à un conduit menant à la première vanne (20) ou un conduit (8) menant au flux de gaz d'échappement (2).

5. Groupe motopompe de dosage selon l'une des revendications précédentes, **caractérisé en ce que** les vannes (20, 21, 22) sont disposées dans la partie (13), conduisant du fluide, du carter (10) de la pompe.

6. Groupe motopompe de dosage selon l'une des revendications précédentes, **caractérisé en ce que** le carter (10) du groupe présente un raccord (18) pour un conduit d'amenée d'air comprimé (27).

7. Groupe motopompe de dosage selon l'une des revendications précédentes, **caractérisé en ce que** le carter (10) du groupe abrite une vanne d'arrêt (22) qui est placée dans le conduit (27) acheminant de l'air comprimé.

8. Groupe motopompe de dosage selon l'une des revendications précédentes, **caractérisé en ce que** le carter (10) du groupe abrite une valve anti-retour qui est placée dans le conduit (27) acheminant de l'air comprimé.

9. Groupe motopompe de dosage selon l'une des revendications précédentes, **caractérisé en ce que** le carter (10) du groupe abrite une zone d'étranglement (23) qui est située dans le conduit (27) acheminant de l'air comprimé et ce, en amont, dans le sens d'écoulement, du point (28) où l'agent de réduction reçoit de l'air comprimé.

10. Groupe motopompe de dosage selon l'une des revendications précédentes, **caractérisé en ce que** le carter (10) du groupe présente, pour chaque conduit acheminant du fluide, qui aboutit dans le carter (10) ou en part, un raccord (18) de conduit, destiné à être relié, d'une façon séparable, à un conduit de raccordement correspondant.

11. Groupe motopompe de dosage selon l'une des revendications précédentes, **caractérisé en ce qu'**à l'intérieur du carter (10) du groupe est également disposée l'électronique de commande et/ou de régulation pour le processus de réduction et la commande des vannes.

12. Groupe motopompe de dosage selon l'une des revendications précédentes, **caractérisé en ce que** des parties de l'électronique de régulation sont disposées en un module de carter (11a), de préférence monté de façon amovible.
